# EUROPEAN PATENT APPLICATION

(11) **EP 4 468 258 A1**
(43) Date of publication of application: **27.11.2024**
(21) Application number: 23175201.5
(22) Date of filing: 24.05.2023
(51) Int. Cl.: G06V 20/56, G06V 20/58

(54) **METHOD FOR DETECTING A DEPOSITION COMPRISING SNOW AND/OR ICE ON A SURROUNDING VEHICLE**

(71) Applicant: Volvo Car Corporation, 405 31 Göteborg (SE)
(72) Inventor: LENNARTSSON, Anders, 40531 Göteborg (SE); PEREZ BARRERA, Oswaldo, 40531 Göteborg (SE)
(74) Representative: Maiwald GmbH

(57) **Abstract**

The disclosure relates to a method (100) for detecting a deposition (22) comprising snow and/or ice on a surrounding vehicle (20), a computer program product, and a vehicle (10) configured to carry out the method (100).

## Description

The present disclosure relates to a method for detecting a deposition comprising snow and/or ice on a surrounding vehicle, a computer program product, and a vehicle configured to carry out the method.

In many countries, it is a violation of traffic law to drive a vehicle with masses of snow and/or ice on the vehicle's roof due to the potential traffic disturbances and danger to other road users involved therewith. Still, in regions with snow fall, during the wintertime in particular, some drivers ignore them or are unaware.

One of the dangers involved with masses of snow and ice on the roof of a vehicle is the risk of it coming off at high driving speeds and hitting other road users. The combination of heavy blocks of snow and ice moving uncontrollably at high speeds cause great force which might be devastating to vehicles and passengers that are travelling on the same road.

The above problem is at least partially solved or alleviated by the subject matter of the independent claims of the present disclosure, wherein further examples are incorporated in the dependent claims.

According to a first aspect of this disclosure, there is provided a method for detecting a deposition comprising snow and/or ice on a surrounding vehicle. The method may be carried out at least partially by an ego vehicle. The method may comprise:
- obtaining representation data representing at least part of the surrounding vehicle in a surrounding of the ego vehicle,
- processing the representation data to identify the surrounding vehicle and a possible deposition (comprising snow and/or ice) as separate objects of the representation data, and
- detecting a deposition (comprising snow and/or ice) on the surrounding vehicle based on the processed representation data.

By means of the method of the first aspect of this disclosure, a deposition comprising snow and/or ice on a surrounding vehicle in a surrounding of an ego vehicle, which at least in part is detecting the deposition, may be reliably detected by obtaining and processing representation data of the surrounding vehicle. The method may be carried out at least partially by an ego vehicle having a surrounding or area around it, in particular a surrounding or area detectable by detection means of the ego vehicle, such as camera and/or sensor means, for example, in which the surrounding vehicle may be detected while standstill or driving of the ego vehicle. The ego vehicle carrying out the method at least partially means that at least one, multiple or all steps of the method may be carried out by the ego vehicle. If some or at least one step of the method as explained herein is not being carried out by the ego vehicle, other devices or systems may carry out the respective step, the method being carried out by the ego vehicle in conjunction with the other devices or systems.

The detection of the deposition comprising snow and/or ice may be performed by first obtaining representation data representing at least part of the surrounding vehicle in the surrounding of the ego vehicle. The representation data may be obtained by receiving the representation data by one or more computers from one or more detection means of the ego vehicle. The representation data representing at least part of the surrounding vehicle means that the representation data may only comprise such information about the surrounding vehicle, which is required to detect a possible deposition on the surrounding vehicle. For example, the representation data may only comprise image data showing the surrounding vehicle.

By processing the representation data, which may be image data, for example, the surrounding vehicle and the possible deposition comprising snow and/or ice on the surrounding vehicle may be detected as separate objects of the representation data, in particular image data. The method may detect the surrounding vehicle in its entirety, e.g., with a possible deposition, via the representation data and therein distinguish between the surrounding vehicle and the deposition such that it may clearly identify the presence of the deposition.

The detection of the deposition is performed based on the processed representation data, which may mean that based on the separation of the representation into two objects, namely the surrounding vehicle and deposition, in the representation data, e.g., by means of image processing of image data of the representation data, the method may determine whether a deposition comprising snow and/or ice is present on the surrounding vehicle, thereby detecting the deposition. When processing image data as representation data, the method may further include analyzing colors in the image data to identify the deposition and the surrounding vehicle, in particular, distinguish them from one another. Also, color analysis may be performed to distinguish a possible deposition from other objects on the surrounding vehicle, in particular its roof, e.g., a roof box. The detection of the deposition may comprise a quantitative and/or qualitative detection, e.g., detection of size, in particular thickness or height, surface area and/or location of the deposition on the surrounding vehicle etc.

The deposition as herein referred to means the deposition comprising snow and/or ice unless otherwise stated. The deposition may predominantly or only comprise snow and/or ice. However, other elements, such as dirt, may also be included in the deposition. The deposition comprising snow and/or ice may comprise one or more layers of snow and/or ice and a certain thickness or deposition height. As explained above, the method may be configured to detect the thickness of the deposition. The thickness or height of the deposition may be compared to a predefined threshold for detecting the deposition and/or assessing a danger or risk involved with the surrounding vehicle having the deposition. This is because typically, relatively small depositions may be detected but it may be desirable to disregard these as the danger from these may be negligible.

The method may be configured such that it can certainly or almost certainly distinguish between a deposition and other objects, such as roof boxes, on the surrounding vehicle, which may be fixed thereto and typically not be of danger to road users. As explained above, this may be done by processing the representation data in certain ways, e.g., by color analysis of image data of the surrounding vehicle. However, having one or more cameras or sensors capable of detecting certain characteristics of snow and/or ice, such as reflected wavelengths of sensor light, for example, may also be used to process the representation data.

In particular, the deposition may be located on the roof of the surrounding vehicle, which may often be the most dangerous location on the vehicle for a deposition comprising snow and/or ice because it is often neglected by the driver as it generally does not block view, it may be hard to reach, and it may only come off at high speeds. The method may provide for detection of the size, such as thickness or height, and/or location of the deposition on the surrounding vehicle based on the processed representation data to assess a danger or risk associated with the surrounding vehicle having the deposition, e.g., when it is approaching or being approached by the ego vehicle. For example, a risk of a danger of a deposition being on the roof of the surrounding vehicle and/or of large size may be higher than for a deposition being on the trunk of the surrounding vehicle and/or of small size.

As a further step of the method according to the first aspect of this disclosure, an action for and/or of the ego vehicle may be determined based on the detected deposition. Such action may be a drive action, as will be explained further herein. Other actions may involve notification of the driver and/or passengers of the ego vehicle about the detected deposition and/or a danger associated therewith. Such notification may include localization of the surrounding vehicle having the deposition and/or information of the deposition based on the processed representation data, e.g., size, thickness, location at the surrounding vehicle, etc. The notification may be acoustic, e.g., by means of an announcement through speakers inside the ego vehicle, and/or visual, e.g., shown on a display of the ego vehicle, for example.

The method of the first aspect may in particular be a computer implemented method. This means that at least one, multiple or all of the steps of the method may be carried out by one or more computers or computing units. Different steps may be carried out by the same or by different computers. A computer is herein understood as a data processing system or apparatus, which can carry out the steps as comprised by the method. The one or more computers may be configured as or provided inside of one more control units of the vehicle. These control units may also be configured to carry out other control operations than described by the method according to the first aspect.

The processing of the representation data may comprise identifying individual heights of the surrounding vehicle and the deposition. This means that a height of the surrounding vehicle and a height or thickness of the deposition are identified. This allows for a quantitative yet simple identification of the surrounding vehicle and the deposition as separated objects.

The processing of the representation data may comprise identifying individual colors of the surrounding vehicle and the deposition. This allows the method to more reliably identify the surrounding vehicle and the deposition as separated objects, at least as long as the colors from the surrounding vehicle and the deposition may be distinguished from one another, in particular when the surrounding vehicle does not have a white color or at least not a white tone, which may possibly not be certainly distinguished from snow and/or ice. Also, the identification of color of the deposition may be used to distinguish between the deposition and other objects secured on the surrounding vehicle, e.g., roof boxes, bicycles, etc.

The vehicle height and/or vehicle color of the surrounding vehicle may be identified and/or verified from a database containing information about a vehicle model of the surrounding vehicle. For example, the ego vehicle may match the representation data in form of or comprising image data of the surrounding vehicle to image data in the database, thereby identifying a certain make and/or model of the surrounding vehicle and thus the information about the vehicle height of the surrounding vehicle. This information may be used for verification of the processed representation data, e.g., confirming that the identified height of the surrounding vehicle based on the processed representation data is accurate or not accurate in order to determine whether a deposition is present and/or the determined thickness of the deposition is accurate. For example, the ego vehicle may have a wireless connection to a server or cloud having the database or the ego vehicle may have such a databased stored on the ego vehicle. In the database, image data of different makes and/or models of vehicles and further information about these vehicles, such as their height, may be stored, for example.

Vehicle information about the surrounding vehicle may be identified through the license plate of the surrounding vehicle and/or through communication with the surrounding vehicle. Such vehicle information may include, but not be limited to, for example, a vehicle model, information associated with the vehicle model, a vehicle height of the vehicle, a vehicle color of the vehicle, etc. For example, the license plate, which may be included in image data of the representation data, may be extracted from the image data and matched to a license plate in the mentioned database. The databased may return the information about the surrounding vehicle, thus identifying the information about the surrounding vehicle. In another example, the ego vehicle may wirelessly communicate with the surrounding vehicle, in particular via a Car2Car communication standard, thereby sharing its vehicle information with the ego vehicle.

The deposition may be identified as an object separate from the surrounding vehicle and with its deposition height by calculating a difference between a measured height of the surrounding vehicle obtained from the of the representation data and the vehicle height of the surrounding vehicle obtained from the database. This is a particularly simple yet effective measure to verify an identified deposition for its detection such that false detections are eliminated or at least significantly reduced.

The detecting step may comprise identifying a size of the deposition and comparing the identified size of the deposition to a size threshold of the deposition. Such size may include volume, height, thickness and/or surface area of the deposition. The size threshold may be predefined such that only depositions are being detected and/or considered for determining an action, in particular a drive action, which are of a size large enough that a predefined minimum risk of danger and/or danger is associated therewith for the ego vehicle and/or other road users. Accordingly, by comparing the identified size to the size threshold, the sensitivity of the method is set such that only relevant depositions in terms of possible danger are detected and/or considered by the method.

The method may further comprise initializing at least the processing of the representation data and/or the detecting of a deposition based on at least one of the following:
- a manual setting,
- an automatic setting for a time of year, weather, weather forecast and/or weather history,
- an automatic setting for a geolocation and/or country.
Accordingly, the method may be toggled off or on based on the manual or automatic setting, which may be performed in a settings menu of the ego vehicle or a device associated therewith, e.g., a smartphone for control of the settings of the ego vehicle. Thereby, the driver or passenger of the ego vehicle is in control of execution of the method. Also, when the likelihood of snow and/or ice is minimal or zero based on, e.g., the weather, geolocation of the ego vehicle, country of the ego vehicle, etc., the method may be toggled off such that computing resources and energy are being saved for other ego vehicle processes. The initializing may be performed as first step of the method. The initializing may be performed for all further steps of the method.

The method may further comprise determining a parked state of surrounding vehicles and/or weather conditions with heavy snow and/or ice formation in an area of the ego vehicle, the method not detecting depositions on surrounding vehicles determined as being in a parked state and/or if weather conditions with heavy snow and/or ice formation are present. The parked state may be determined based on the obtained representation data. For example, based on image data and/or sensor data of the representation data, it may be determined that a surrounding vehicle is parked or not moving, such that a parked state for that surrounding vehicle is determined. The danger from surrounding vehicles with depositions in a parked state are typically very limited and the likelihood of them having depositions in snowy regions is high due to the vehicles not being moved. Accordingly, a high number of detection of depositions without any danger involved may be avoided. The heavy snow and/or ice formation may be determined based on the representation data, in particular image data showing such heavy snow and/or ice formation, and/or based on weather data, which may be based on one or more sensor readings of the ego vehicle, e.g., a temperature sensor, and/or weather data received wirelessly via the internet or any other wireless service. Heavy snow and/or ice formation is another case in which the detection of depositions may be disabled because it may be difficult to avoid depositions during such cases and typically the vehicles will be driving with higher care and alert in such situation. By disabling the detection of depositions in the above cases, it can be avoided that the driver of the ego vehicle is distracted from the driving by frequent notifications based on the detected depositions.

The method may further comprise determining at least one drive action for the ego vehicle based on the detected deposition. Such drive action may be communicated to the driver of the ego vehicle, e.g., displayed as text, symbol etc., or announced acoustically, such that the driver may take corresponding action. For example, the determined drive action may be to slow down, brake, accelerate and/or switch lanes depending on the determined position of the surrounding vehicle having the deposition. The ego vehicle may be provided with autonomous driving capabilities. The autonomous driving capabilities may be partial, such as holding its travelled road lane and distance towards a vehicle ahead of it, or full, meaning fully autonomous driving capabilities, in which a passenger is not required to take any action to drive the ego vehicle. In such a case, the ego vehicle may autonomously perform the determined at least one drive action to reduce the risk of an accident if the deposition should come off from the surrounding vehicle during travel.

The method may further comprise providing information about the surrounding vehicle having the detected deposition for transmission to the surrounding vehicle, to other road users in the area, to traffic infrastructure and/or to distant instances. Other road users may be vehicles or passengers, for example. The provided information may be transmitted or broadcasted via wireless electronic communication, in particular via a cellular network, by means of communication means or system of the ego vehicle, comprising, for example, an antenna. Such communication may be performed as Car2X or Car2Car communication, for example. Alternatively, or additionally, the provided information may also include an instruction for using the horn of the ego vehicle as communication means such that alert is raised to the driver of the ego vehicle and/or other road users acoustically. Traffic infrastructure may be intelligent infrastructure capable of receiving the provided information wirelessly. Distant instances may be relevant authorities. For example, a call, a message or similar may be sent to such relevant authorities such that they may act soon and stop the surrounding vehicle so that the deposition is removed.

The information to be transmitted may include at least one image and/or video of the surrounding vehicle. Such image and/or video of the surrounding vehicle may be separately verified by the other road users, traffic infrastructure and/or distant instances. Authorities may use such material to fine the driver or owner of the surrounding vehicle, thereby reducing the unawareness of vehicles drivers concerning the danger associated with depositions comprising snow and/or ice on their vehicles and thus vehicles in traffic having dangerous depositions.

The method may further comprise receiving information about the surrounding vehicle having the detected deposition for confirmation of the detected deposition from another vehicle in the area and/or traffic infrastructure. Thereby, the detection accuracy may be improved. In particular, other road users may have other information based on other representation data, which they may have obtained from different perspectives/angles than the ego vehicle, such that based on more information about the surrounding vehicle, a higher accuracy in detection may be achieved.

According to a second aspect of this disclosure, there is provided a method for detecting a deposition comprising snow and/or ice on a surrounding vehicle, the method of the second aspect comprising the method of the first aspect and further comprising at least one further step performed by the ego vehicle. Such a step may be, for example, the recording of the representation data by representation means, in particular camera and/or sensor means, of the ego vehicle. The recorded representation data may then be obtained by the one or more computers of the ego vehicle. Also, for example, performing a drive action and/or transmittal of the provided information about the surrounding vehicle to the surrounding vehicle, to other road users in the area, to traffic infrastructure and/or to distant instances, may be steps of the method according to the second aspect.

In contrast to the method of the first aspect of this disclosure, which may be computer implemented, the method of the second aspect of this disclosure may be carried out partially or entirely by the ego vehicle. For example, processing means such as a a computer or control unit in the ego vehicle may carry out the method of the first aspect, while the other steps of the method are carried out by corresponding means of the ego vehicle, which may rely on the or other computers, but not be solely made up of such. For example, a representation means such as a camera and/or sensor means of the ego vehicle may record the representation data, a communication system, such as an antenna system, may transmit the provided information and/or an at least partially autonomous drive system of the ego vehicle may perform the drive action.

According to a third aspect of this disclosure, there is provided a computer program product comprising instructions which, when the program is executed by a computer, cause the computer to carry out the method according to the first aspect and/or the second aspect of this disclosure.

The computer program product may be a computer program as such, meaning a computer program consisting of or comprising a program code to be executed by the computer. Alternatively, the computer program product may be a product such as a data storage, on which the computer program is temporarily or permanently stored.

According to a fourth aspect of this disclosure, there is provided a data processing apparatus comprising means for carrying out the method according to the first aspect of this disclosure. In particular, the data processing apparatus may execute or comprise the computer program product according to the third aspect of this disclosure.

According to a fifth aspect of this disclosure, there is provided a vehicle comprising processing means for obtaining representation data of the surrounding vehicle and for processing the obtained representation data, the vehicle being configured to carry out the method according to the first aspect or second aspect of this disclosure.

The vehicle being configured to carry out the method according to the first or second aspect of this disclosure in particular means that the respective components of the vehicle are configured to carry out the respective steps of the method according to the second aspect of this disclosure. For example, the steps of the method according to the first aspect may be carried out by the processing means, which may be one or more computers. The further steps of the method according to the second aspect may be carried out by further means, e.g., representation means, an at least partially autonomous drive system and/or a communication system.

It is noted that the above aspects, examples and features may be combined with each other irrespective of the aspect involved.

The above and other aspects of the present disclosure will become apparent from and elucidated with reference to the examples described hereinafter.

Examples of the disclosure will be described in the following with reference to the following drawings illustrating representations of:
- Fig. 1: a method for detecting a deposition comprising snow and/or ice on a surrounding vehicle,
- Fig. 2: sub-steps of a step in the method of Fig. 1,
- Fig. 3: an ego vehicle for carrying out the method of Fig. 1,
- Fig. 4: the surrounding vehicle of the method of Fig. 1,
- Fig. 5: a driving scenario, in which the method of Fig. 1 may be used,
- Fig. 6: another driving scenario, in which the method of Fig. 1 may be used, and
- Fig. 7: the continued driving scenario of Fig. 6.

The figures are merely schematic representations and serve only to illustrate examples of the disclosure. Identical or equivalent elements are in principle provided with the same reference signs.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order and any of the described steps may be optional unless otherwise referred to.

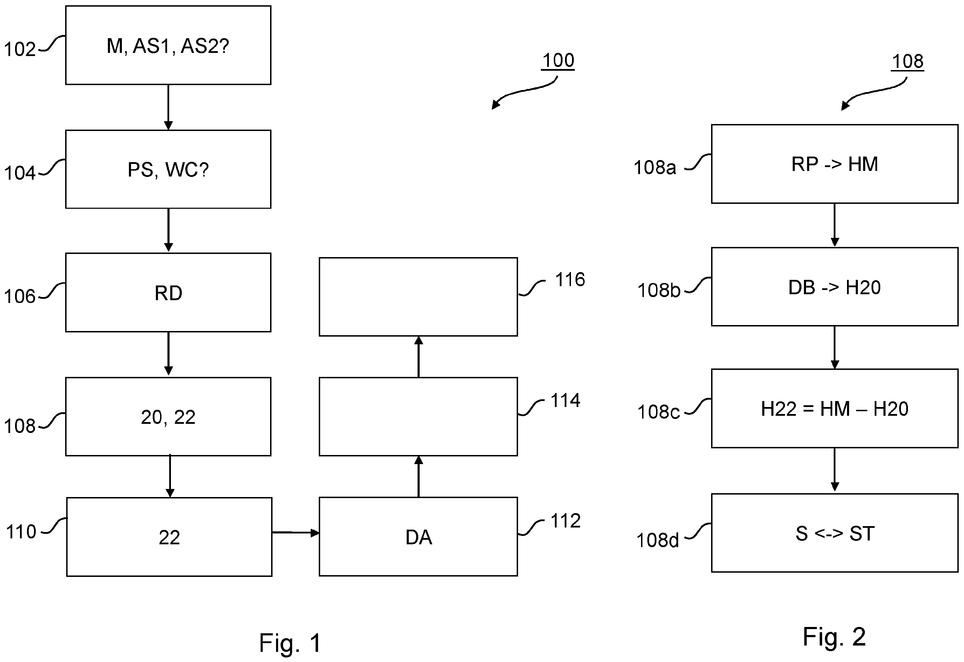

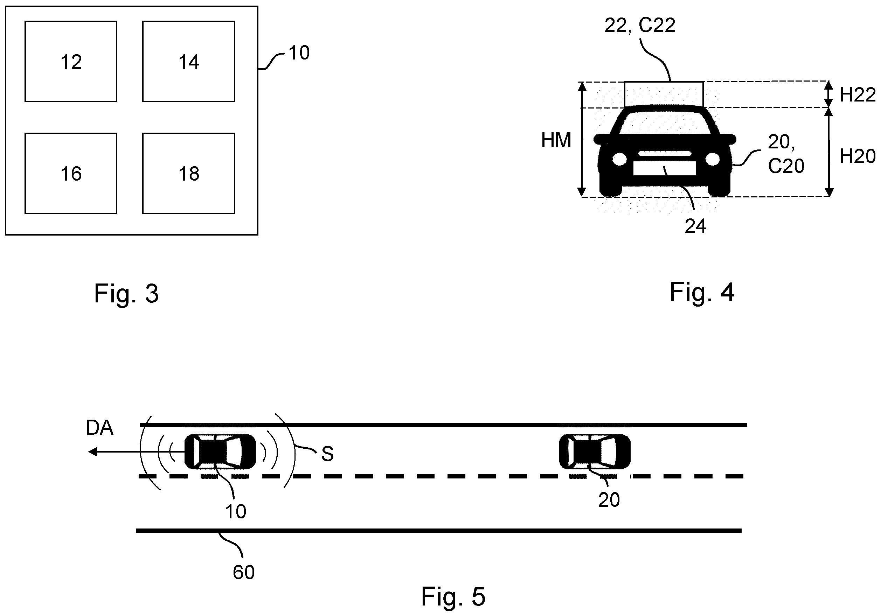

Figure 1 illustrates a method 100 for detecting a deposition 22 comprising snow and/or ice on a surrounding vehicle 20 (see Figs. 4 to 7), particularly on its roof.

The method 100 may be carried out by an ego vehicle 10, in the surrounding S (see. Figs. 5 to 7) of which the surrounding vehicle 20 is driving. The surrounding S is schematically represented in Figs. 5 to 7 as a detection area of a representation means 12 (see Fig. 3) of the ego vehicle 10, which may comprise or make use of at least one camera and/or at least one sensor for recording representation data RD of the surrounding vehicle 20 to be obtained by a processing means 14 of the ego vehicle 10, which may be one or more computers or control units (see Fig. 3).

In an exemplary first step 102 of the method 100, the further steps of the method 100 may be initialized based on a manual setting MS, a first automatic setting for a time of year, weather, weather forecast and/or weather history AS1, and/or a second automatic setting for a geolocation and/or country AS2. The respective settings may be toggled on or off in the ego vehicle 10 such that the method 100 may be carried out or not.

In an exemplary second step 104 of the method 100, surrounding vehicles 20 being in a parked states PS in the surrounding S of the ego vehicle 10 are being determined. The method 100 may not be carried out for surrounding vehicles 20 in the parked state PS. Also, in the second step 104 of the method 100, weather conditions with heavy snow and/or ice formation WC in an area of the ego vehicle 10 may be determined. If weather conditions with heavy snow and/or ice formation WC are present, the method 100 may not be further executed. For the afore mentioned cases, the method 100 may be restricted due to the little danger associated with parking surrounding vehicles 20 and due to the weather conditions with heavy snow and/or ice formation WC.

In a third step 106 of the method 100, representation data RD representing at least part of the surrounding vehicle 20 in the surrounding S of the ego vehicle 10 are being obtained. Such representation RD may be recorded by means of the mentioned camera and/or sensor means of the ego vehicle 10, for example. The representation data RD may include image data of the surrounding vehicle 20.

In a fourth step 108 of the method 100, the obtained representation data RD is processed to identify the surrounding vehicle 20 and a possible deposition 22 as separate objects of the representation data RD.

In a fifth step 110 of the method 100, the possible deposition 22 is detected as a deposition 22 on the surrounding vehicle 20 based on the processed representation data RD, namely the separately identified objects of the surrounding vehicle 20 and the deposition 22.

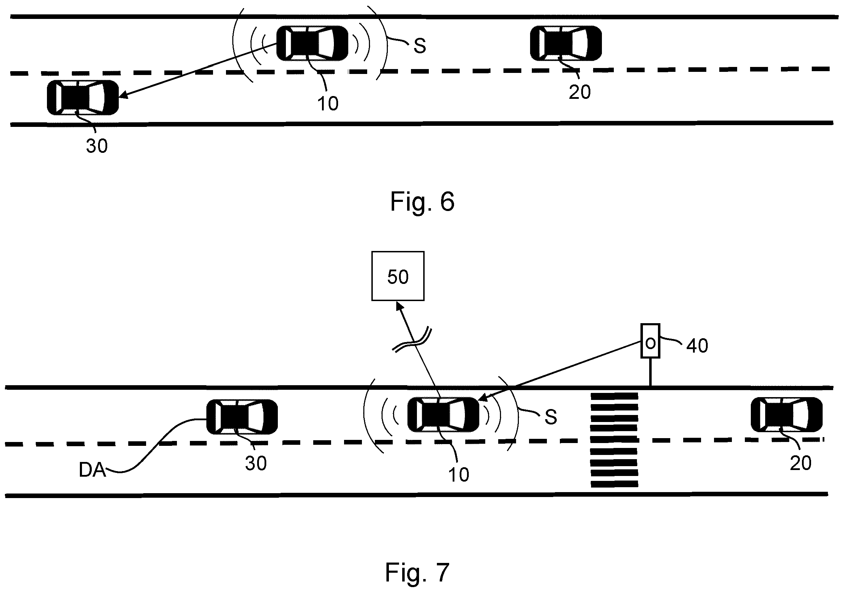

Then, in a sixth step 112 of the method 100, a drive action DA may be determined for the ego vehicle 10 such that the danger associated with the detected deposition 22 on the surrounding vehicle 20 may be minimized. Examples of such drive actions DA are illustrated in Fig. 5 and 7 and will be explained later in more detail. The drive action DA may be carried out by an at least partially autonomous drive system 16 of the vehicle 10 (see Fig. 3).

A further, seventh step 114 of the method 100 may include providing information about the surrounding vehicle 20 having the detected deposition 22 for transmission to the surrounding vehicle 20, to other road users 30 in the area, to traffic infrastructure 40 and/or to distant instances 50. Consequently, the provided information may be transmitted to these. A communication system 18 of the ego vehicle 10 as illustrated in Fig. 3 may be used for the transmission. The transmittal of such information is exemplary illustrated in Figs. 6 and 7 and will be explained later in more detail.

A further, seventh step 116 of the method 100 may be receiving information about the surrounding vehicle 20 having the detected deposition 22 for confirmation of the detected deposition 22 from another road user 30 in the area and/or traffic infrastructure 40.

Figure 2 illustrates sub-steps of the fourth step 108 of the method 100. In a first sub-step 108a, based on the representation data RD, a height of the surrounding vehicle 20 is measured. The determined measured height HM represents the height of the surrounding vehicle 20 with any possible deposition 22 on its roof as may be seen in Fig. 4.

In a second sub-step 108b of the fourth step 108, a vehicle height H20 of the surrounding vehicle 20 is obtained from a database DB. Such database DB may be stored on ego vehicle 10 or in a cloud or other instance, to which the ego vehicle 10 may have wireless access via its communication system 18. For example, the ego vehicle 10 may identify vehicle information about the surrounding vehicle 20 via its license plate 24 (see Fig. 4) included in the representation data RD and from the database DB to obtain the therein stored vehicle heigh H20 for that license plate 24.

In a third sub-step 108c of the fourth step 108, a deposition height H22 of the deposition 22 is determined as a difference between the measured height H22 and the obtained vehicle height H20.

This deposition height H22, as a size measure of a size S of the deposition 22, together with other size measures of the size S or alone, may then be compared to a predefined size threshold ST in a fourth sub-step 108d of the fourth step 108. If the size threshold ST is met by the size S represented at least by the deposition height H22, the deposition 22 may be detected in the fifth step 110 of the method 100.

As further illustrated in Fig. 4, additionally, the processing of the representation data RD in the fourth step 108 of the method 100, may include identifying individual colors C20, C22 of the surrounding vehicle 20 and the deposition 22. The identified vehicle color C20 of the surrounding vehicle 20 may, similarly to the vehicle height H20, be compared to a vehicle color C20 stored in the database DB for verification and distinguishing the deposition 22 from the surrounding vehicle 20, thereby increasing the accuracy of the method 100.

Figure 5 illustrates an example of a driving scenario in which a surrounding vehicle 20 in the surrounding S of an ego vehicle 10 on a road 60 is having a deposition 22 comprising snow and/or ice (see Fig. 4). The deposition 22 is being detected by the ego vehicle 10 by means of the method 100 as explained above and a drive action DA is determined and being carried out by the ego vehicle 10. In the example of Fig. 5, the drive action DA is to slow down the ego vehicle 10 to keep more distance to the surrounding vehicle 20 travelling in front of the ego vehicle 10, thereby minimizing a risk that the deposition 22 hits the ego vehicle 10 when it comes off the roof of the surrounding vehicle 20.

Figure 6 illustrates another example of a driving scenario similar to the one of Fig. 5 but with another road user 30 in form of a vehicle travelling the road 60. In this exemplary case, the other road user 30 is aiming to overtake the ego vehicle 10 and the surrounding vehicle 20. The ego vehicle 10 as indicated by the arrow linking the ego vehicle 10 with the surrounding vehicle 30 is informing the surrounding vehicle 30 by transmittal of corresponding information about the surrounding vehicle 20 indicating that it has a deposition 22 on its roof of the potential danger associated therewith. The transmittal of the information may be directly or via another instance, e.g., a cloud, for example.

Figure 7 illustrates the driving scenario of Fig. 6 after the road user 30 has been informed by the ego vehicle 10 about the surrounding vehicle 20 having the deposition 22. The road user 30 has correspondingly performed a drive action DA as indicated by the line denominated DA. The road user 30 is now driving behind the ego vehicle 10 and does not intend to overtake the surrounding vehicle 20 anymore.

Also, Fig. 7 shows that the ego vehicle 10 is further transmitting information to a traffic infrastructure 40, shown exemplary as a traffic light, and another distant instance 50, which may be an authority, such as the police, authorized to stop and/or fine the surrounding vehicle 20 for driving with the deposition 22 and endangering other road users 30. The information transmitted to the distant instance 50 may comprise image and/or video material of the surrounding vehicle 20 as proof.

Other variations to the disclosed examples can be understood and effected by those skilled in the art in practicing the claimed disclosure, from the study of the drawings, the disclosure, and the appended claims. In the claims the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: representation means
- 14: processing means
- 16: at least partially autonomous drive system
- 18: communication system
- 20: surrounding vehicle
- 22: deposition
- 24: license plate
- 30: road user
- 40: traffic infrastructure
- 50: distant instance
- 60: road
- 100: method
- 100-116: steps
- 108a-108d: sub-steps
- AS 1: first automatic setting
- AS2: second automatic setting
- C20: vehicle color
- C22: deposition color
- DA: drive action
- DB: database
- H20: vehicle height
- H22: deposition height
- HM: measured height
- MS: manual setting
- PS: parked state
- RD: representation data
- S: size
- ST: size threshold
- WC: weather conditions with heavy snow and/or ice formation

## Claims

1. A method (100) for detecting a deposition (22) comprising snow and/or ice on a surrounding vehicle (20), the method (100) at least partially being carried out by an ego vehicle (10) and comprising:
- obtaining representation data (RD) representing at least part of the surrounding vehicle (20) in a surrounding (S) of the ego vehicle (10),
- processing the representation data (RD) to identify the surrounding vehicle (20) and a possible deposition (22) as separate objects of the representation data (RD), and
- detecting a deposition (22) on the surrounding vehicle (20) based on the processed representation data (RD).

2. The method (100) according to claim 1, the processing of the representation data (RD) comprising identifying individual heights (H20, H22) of the surrounding vehicle (20) and the deposition (22).

3. The method (100) according to claim 1 or 2, the processing of the representation data (RD) comprising identifying individual colors (C20, C22) of the surrounding vehicle (20) and the deposition (22).

4. The method (100) according to claim 2 and/or 3, the vehicle height (H20) and/or vehicle color (C20) of the surrounding vehicle (20) being identified and/or verified from a database (DB) containing information about a vehicle model of the surrounding vehicle (20).

5. The method (100) according to claim 4, vehicle information about the surrounding vehicle (20) being identified through the license plate (24) of the surrounding vehicle (20) and/or through communication with the surrounding vehicle (20).

6. The method (100) according to claim 4 or 5, the deposition (22) being identified as an object separate from the surrounding vehicle (20) and with its deposition height (H22) by calculating a difference between a measured height (HM) of the surrounding vehicle (20) obtained from the representation data (RD) and the vehicle height (H20) of the surrounding vehicle (20) obtained from the database (DB).

7. The method (100) according to any of the previous claims, the detecting step comprising identifying a size (S) of the deposition (22) and comparing the identifying size (S) of the deposition (22) to a size threshold (ST) of the deposition (22).

8. The method (100) according to any of the previous claims, the method (100) further comprising initializing at least the processing of the representation data (RD) and/or the detecting of a deposition (22) based on at least one of the following:
- a manual setting (MS),
- an automatic setting for a time of year, weather, weather forecast and/or weather history (AS 1),
- an automatic setting for a geolocation and/or country (AS2).

9. The method (100) according to any of the previous claims, the method (100) further comprising determining a parked state (PS) of surrounding vehicles (20) and/or weather conditions with heavy snow and/or ice formation (WC) in an area of the ego vehicle (10), the method (100) not detecting depositions (22) on surrounding vehicles (20) determined as being in a parked state (PS) and/or if weather conditions with heavy snow and/or ice formation (WC) are present.

10. The method (100) according to any of the previous claims, the method (100) further comprising determining at least one drive action (DA) for the ego vehicle (10) based on the detected deposition (22).

11. The method (100) according to any of the previous claims, the method (100) further comprising providing information about the surrounding vehicle (20) having the detected deposition (22) for transmission to the surrounding vehicle (20), to other road users (30) in the area, to traffic infrastructure (40) and/or to distant instances (50).

12. The method (100) according to claim 11, the information to be transmitted including at least one image and/or video of the surrounding vehicle (20).

13. The method (100) according to any of the previous claims, the method (100) further comprising receiving information about the surrounding vehicle (20) having the detected deposition (22) for confirmation of the detected deposition (22) from another road user (30) in the area and/or traffic infrastructure (40).

14. Computer program product, comprising instructions which, when the program is executed by a computer, cause the computer to carry out the method (100) according to any of the previous claims.

15. A vehicle (10) comprising processing means (14) for obtaining representation data (RD) of the surrounding vehicle (20) and for processing the obtained representation data (RD), the vehicle (10) being configured to carry out the method (100) according to any of the claims 1 to 13.
